(19) Europäisches Patentamt / European Patent Office / Office européen des brevets

(11) **EP 2 613 214 B1**

(12) **FASCICULE DE BREVET EUROPEEN**

(45) Date de publication et mention de la délivrance du brevet:
**02.08.2017 Bulletin 2017/31**

(51) Int Cl.:
*G05D 1/00* *(2006.01)*   *H04N 5/232* *(2006.01)*
*A63H 30/04* *(2006.01)*   *A63H 27/00* *(2006.01)*

(21) Numéro de dépôt: **13150137.1**

(22) Date de dépôt: **03.01.2013**

(54) **Procédé de pilotage d'un drone à voilure tournante pour opérer une prise de vue par une caméra embarquée avec minimisation des mouvements perturbateurs**

Steuerungsverfahren einer Drehflügel-Drone, um Aufnahmen mit einer Bordkamera mit Minimierung der störenden Bewegungen zu machen

Method for controlling a rotary-wing drone to operate photography by an on-board camera with minimisation of interfering movements

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.01.2012 FR 1250112**

(43) Date de publication de la demande:
**10.07.2013 Bulletin 2013/28**

(73) Titulaire: **Parrot Drones**
**75010 Paris (FR)**

(72) Inventeurs:
• **Rischmuller, Michael**
**13090 Aix-en-Provence (FR)**
• **Callou, François**
**75012 Paris (FR)**

(74) Mandataire: **Dupuis-Latour, Dominique**
**Bardehle Pagenberg**
**10, boulevard Haussmann**
**75009 Paris (FR)**

(56) Documents cités:
**WO-A2-2010/061099   WO-A2-2010/100436**
**US-A1- 2009 157 233**

• **SAUNDERS J ET AL: "Tracking a target in wind using a micro air vehicle with a fixed angle camera", AMERICAN CONTROL CONFERENCE, 2008, IEEE, PISCATAWAY, NJ, USA, 11 juin 2008 (2008-06-11), pages 3863-3868, XP031296660, ISBN: 978-1-4244-2078-0**

**Description**

L'invention concerne les drones à voilure tournante tels que les quadricoptères et analogues.

Ces drones sont pourvus de rotors multiples entraînés par des moteurs respectifs commandables de manière différenciée afin de piloter le drone en attitude et en vitesse.

Un exemple typique d'un tel drone est le *AR.Drone* de Parrot SA, Paris, France, qui est un quadricoptère équipé d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Ce drone est piloté par l'utilisateur au moyen d'un dispositif de télécommande déportée - ci-après désigné "appareil" - relié au drone par une liaison radio.

Les WO 2010/061099 A2 et EP 2 364 757 A1 (Parrot SA) décrivent un tel drone ainsi que son principe de pilotage par l'intermédiaire d'un téléphone ou baladeur multimédia à écran tactile et accéléromètre intégré, par exemple un téléphone cellulaire de type *iPhone* ou un baladeur ou une tablette multimédia de type *iPod Touch* ou *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées). Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

Plus précisément, le drone est piloté par l'utilisateur au moyen de signaux émis par le détecteur d'inclinaisons de l'appareil, inclinaisons qui seront répliquées par le drone : par exemple, pour faire avancer le drone l'utilisateur incline son appareil selon son axe de tangage, et pour déporter le drone à droite ou à gauche il incline ce même appareil par rapport à son axe de roulis. De cette manière, si le drone est commandé de manière à s'incliner ou "plonger" vers le bas (inclinaison suivant un angle de tangage), il progressera vers l'avant avec une vitesse d'autant plus élevée que l'inclinaison sera importante ; inversement s'il est commandé de manière à se "cabrer" dans le sens opposé, sa vitesse ralentira progressivement puis s'inversera en repartant vers l'arrière. De la même façon, pour une commande d'inclinaison suivant un axe de roulis le drone penchera à droite ou à gauche, provoquant un déplacement linéaire en translation horizontale vers la droite ou vers la gauche.

L'utilisateur dispose d'autres commandes affichées sur l'écran tactile, notamment de "montée/descente" (commande des gaz) et de " pivotement à droite/ pivotement à gauche" (pivotement du drone autour de son axe de lacet).

Le drone est également pourvu d'une commande de passage en point fixe : lorsque l'utilisateur lâche toutes les commandes de son appareil de télécommande, le drone s'immobilise au point fixe et s'y stabilise de façon entièrement automatique.

La caméra vidéo du drone est utilisable non seulement pour le pilotage en "mode immersif" (c'est-à-dire où l'utilisateur se sert de l'image de la caméra embarquée de la même façon que s'il se trouvait lui-même à bord du drone), mais également pour capter des séquences d'image d'une scène vers laquelle est dirigé le drone. L'utilisateur peut ainsi se servir de la caméra du drone de la même façon que d'une caméra ou d'un caméscope qui, au lieu d'être tenu à la main, serait porté par le drone.

Mais dans son vol le drone est sujet à de nombreux mouvements parasites qui vont provoquer des oscillations et sautillements intempestifs de l'image captée par la caméra.

En particulier, avec la caméra qui pointe dans la direction principale du drone (direction correspondant à l'axe de roulis), tout mouvement autour de l'axe de tangage (perpendiculairement à l'axe de la caméra) produira sur l'image des oscillations verticales dégradant fortement la lisibilité et la qualité de l'image captée. Or, comme on l'a exposé plus haut, les déplacements du drone, qu'ils soient commandés par l'utilisateur ou asservis par le pilote automatique, résultent principalement de mouvements de bascule autour des axes de tangage (déplacement avant/arrière) et de roulis (déplacement gauche/droite), qui sont inhérents au principe même de fonctionnement d'un drone de type quadricoptère. Ce problème , qui est spécifique à la nature même des quadricoptères, ne se retrouve pas avec les drones à voilure fixe tels que ceux décrits par les WO 2010/100436 A2 ou US 2009/0157233 A1, qui sont intrinsèquement stables dès lors qu'ils évoluent à une certaine vitesse horizontale, et ne sont donc pas sujets à des oscillations permanentes autour d'une position de consigne d'attitude. On connaît certes de nombreuses techniques de stabilisation d'image, mais ces techniques ne sont malheureusement pas applicables au cas particulier évoqué ici :

- dans la mesure où le drone est un objet volant qui n'est pas lié à un support, les systèmes mécaniques de stabilisation à bras et contrepoids déportant le centre de gravité de la caméra au niveau d'un cardan (technique *steadicam*) ne sont pas utilisables ;
- la stabilisation par déplacement en temps réel d'éléments optiques de l'objectif, ou du capteur dans le plan focal, qui sont des techniques couramment appliquées en photographie, ne sont pas non plus envisageables compte tenu du choix comme caméra d'un composant miniature intégré, pour des questions de poids et d'encombrement ;
- enfin, le post-traitement de l'image vidéo, avec ou sans utilisation de données gyroscopiques recueillies pendant le vol, requerrait des ressources de calcul relativement importantes, incompatibles avec la capacité du microcalculateur embarqué par le drone, et introduirait un temps de latence non négligeable ne permettant pas un contrôle efficace du drone en temps réel.

Le problème de l'invention est de trouver une autre technique de stabilisation qui permette de produire une séquence d'image vidéo avec le moins possible de mouvements indésirables répercutés dans l'image.

L'idée de base de l'invention consiste à adapter le contrôle des moteurs du drone de façon à limiter à un minimum les mouvements parasites de la caméra. Pour cela, l'utilisateur choisit un mode de prise de vue particulier (travelling, panoramique ...), qui définit automatiquement pour le drone une trajectoire correspondante présélectionnée, adaptée de manière à minimiser les oscillations parasites, avec modification appropriée des asservissements du drone en fonction du mode de prise de vue choisi. Le drone passe alors dans un mode d'autopilotage stabilisé contrôlant ses mouvements dans l'espace. La prise de vue par la caméra vidéo peut alors être activée, le contrôle du pilote automatique s'adaptant de lui-même aux contraintes de la vidéo stabilisée.

Plus précisément, l'invention a pour objet un procédé de pilotage du type général divulgué par le WO 2010/100436 A2 précité, correspondant au préambule de la revendication 1. Pour résoudre le problème spécifique exposé plus haut, l'invention prévoit les caractéristiques exposées dans la partie caractérisante de la revendication 1.

Les sous revendications détaillent les divers modes de prise en vue possibles, avec des mises en ouvre possibles, préférentielles. On va maintenant décrire un exemple de mise en oeuvre du dispositif de l'invention, en référence aux dessins annexés où les mêmes références numériques désignent d'une figure à l'autre des éléments identiques ou fonctionnellement semblables.

La Figure 1 est une vue d'ensemble montrant le drone et l'appareil de télécommande associé permettant son pilotage à distance.

La Figure 2 est une illustration schématisant le mouvement à imprimer au drone pour réaliser une prise de vue en travelling frontal.

La Figure 3 est une illustration schématisant le mouvement à imprimer au drone pour réaliser une prise de vue en travelling latéral.

La Figure 4 est une illustration schématisant le mouvement à imprimer au drone pour réaliser une prise de vue en panoramique.

La Figure 5 est une illustration schématisant le mouvement à imprimer au drone pour réaliser une prise de vue en mode plan grue.

La Figure 6 montre un exemple de commandes présentées à l'utilisateur sur l'écran du dispositif pour une prise de vue en mode travelling.

La Figure 7 montre un exemple de commandes présentées à l'utilisateur sur l'écran du dispositif pour une prise de vue en mode panoramique.

La Figure 8 montre un exemple de commandes présentées à l'utilisateur sur l'écran du dispositif pour une prise de vue en mode plan grue.

La Figure 9 est un schéma par blocs des différents organes de contrôle, d'asservissement et de pilotage assisté du drone dans une configuration de pilotage asservi conventionnel.

La Figure 10 est un schéma correspondant à celui de la Figure 9, modifié pour une configuration d'autopilotage en mode travelling.

La Figure 11 est un schéma correspondant à celui de la Figure 9, modifié pour une configuration d'autopilotage en mode panoramique.

La Figure 12 est un schéma correspondant à celui de la Figure 9, modifié pour une configuration d'autopilotage en mode plan grue.

On va maintenant décrire un exemple de mise en oeuvre de l'invention.

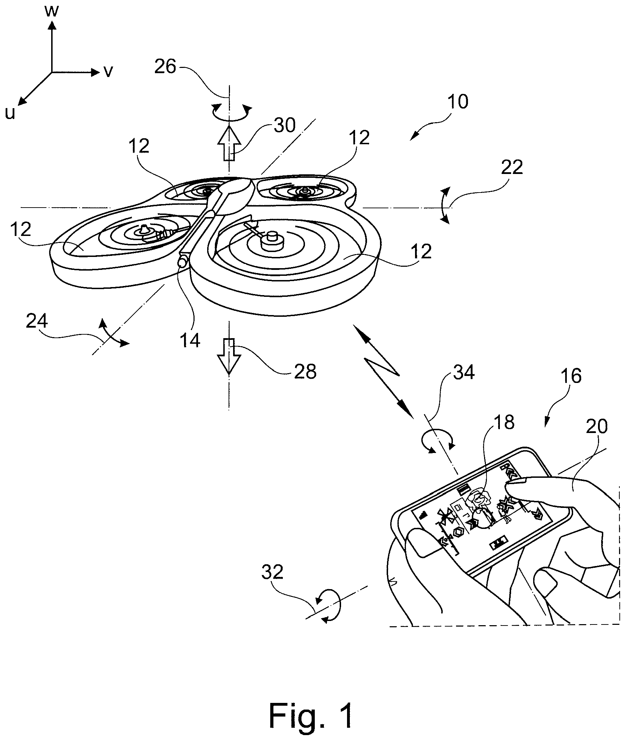

Sur la Figure 1, la référence 10 désigne de façon générale un drone, qui est par exemple un quadricoptère tel que le modèle *AR.Drone* de Parrot SA, Paris, France, décrit notamment dans les WO 2010/061099 A2 et EP 2 364 757 A1 précités, ainsi que dans les WO 2009/109711 A2 (qui décrit un exemple de système de stabilisation automatique à partir des informations fournies par un altimètre et une caméra à visée frontale) et FR 2 915 569 A1 (qui décrit notamment le système de contrôle avec gyromètres et accéléromètres utilisé par le drone).

Le drone 10 comporte quatre rotors coplanaires 12 dont les moteurs sont pilotés indépendamment par un système intégré de navigation et de contrôle d'attitude. Il est pourvu d'une première caméra 14 à visée frontale permettant d'obtenir une image de la scène vers laquelle est orienté le drone, par exemple une caméra grand angle à capteur CMOS.

Le drone comporte également une seconde caméra à visée verticale (non représentée) pointant vers le bas, apte à capter des images successives du terrain survolé et utilisée notamment pour évaluer la vitesse du drone par rapport au sol. Des capteurs inertiels (accéléromètres et gyromètres) permettent de mesurer avec une certaine précision les vitesses angulaires et les angles d'attitude du drone, c'est-à-dire les angles d'Euler décrivant l'inclinaison du drone.

De façon générale, par "inclinaison", on entendra l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis.

Un télémètre à ultrasons disposé sous le drone fournit par ailleurs une mesure de l'altitude par rapport au sol.

En ce qui concerne la vitesse linéaire de translation du drone, celle-ci est évaluée par analyse de l'image fournie par la caméra à visée verticale du drone en combinaison avec les données accélérométriques, grâce à un logiciel qui estime le déplacement de la scène captée par la caméra d'une image à la suivante et applique à ce déplacement estimé un facteur d'échelle fonction de l'altitude mesurée.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone pour l'échange bidirectionnel de données du drone 10 vers l'appareil 16, notamment pour la transmission de l'image captée par la caméra 14, et de l'appareil 16 vers le drone 10 pour l'envoi de commandes de pilotage. Cette liaison peut être par exemple de type réseau local *Wi-Fi* (IEEE 802.11) ou *Bluetooth* (marques déposées).

L'appareil 16 est également pourvu de capteurs d'inclinaison permettant de contrôler l'attitude du drone en imprimant à l'appareil des inclinaisons correspondantes selon des axes de roulis et de tangage (on pourra se référer au WO 2010/061099 A2 précité pour plus de détails sur ces aspects du système).

Comme indiqué en introduction, l'appareil de télécommande 16 est avantageusement constitué par un téléphone ou baladeur multimedia à écran tactile et accéléromètre intégré, par exemple un téléphone cellulaire de type *iPhone*, un baladeur de type *iPod Touch* ou une tablette multimédia de type *iPad*, qui sont des appareils incorporant les divers organes de contrôle nécessaires à l'affichage et à la détection des commandes de pilotage, à la visualisation de l'image captée par la caméra frontale, et à l'échange bidirectionnel de données avec le drone par liaison *Wi-Fi* ou *Bluetooth*.

Le pilotage du drone 10 consiste à faire évoluer celui-ci par :

a) rotation autour d'un axe de tangage 22, pour le faire avancer ou reculer ; et/ou
b) rotation autour d'un axe de roulis 24, pour le décaler vers la droite ou vers la gauche ; et/ou
c) rotation autour d'un axe de lacet 26, pour faire pivoter vers la droite ou vers la gauche l'axe principal du drone - et donc aussi la direction de pointage de la caméra frontale 14 ; et/ou
d) translation vers le bas 28 ou vers le haut 30 par changement du régime des gaz, de manière à respectivement réduire ou augmenter l'altitude du drone.

Lorsque ces commandes de pilotage sont appliquées par l'utilisateur à partir de l'appareil de télécommande 16, les commandes a) et b) de pivotement autour des axes de tangage 22 et de roulis 24 sont obtenues par des inclinaisons de l'appareil 16 respectivement autour de son axe longitudinal 32 et de son axe transversal 34 : par exemple, pour faire avancer le drone il suffit d'incliner l'appareil vers l'avant en le penchant autour de l'axe 32, pour le déporter à droite il suffit d'incliner l'appareil en le penchant autour de l'axe 34 vers la droite, etc.

Les commandes c) et d), quant à elles, résultent d'actions appliquées par contact du doigt 20 de l'utilisateur (généralement le doigt droit) sur des zones spécifiques correspondantes de l'écran tactile 18.

Le drone possède également un système automatique et autonome de stabilisation en vol stationnaire, activé notamment dès que l'utilisateur retire son doigt de l'écran tactile de l'appareil, ou automatiquement à la fin de la phase de décollage, ou encore en cas d'interruption de la liaison radio entre l'appareil et le drone. Le drone passe alors à un état de sustentation où il sera immobilisé et stabilisé automatiquement dans cette position fixe, sans aucune intervention de l'utilisateur.

On va maintenant exposer la manière dont sont élaborées les consignes de pilotage des moteurs du drone pour permettre de réaliser des prises de vue au moyen de la caméra frontale 14 avec le minimum de mouvements perturbateurs susceptibles de parasiter l'image captée.

On décrira l'exemple de trois modes de prise de vue typiques, à savoir :

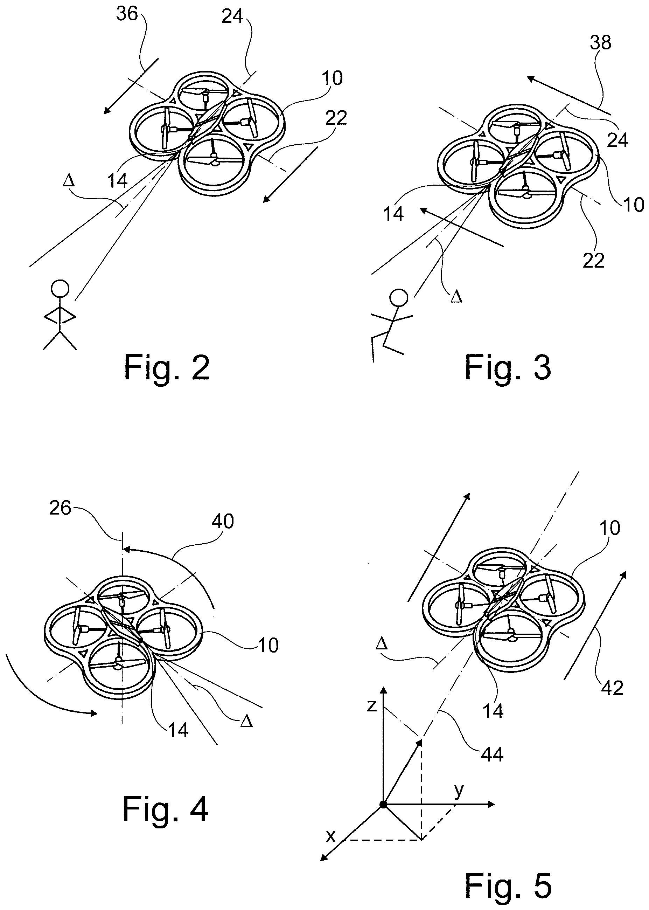

- travelling, en référence plus particulièrement aux Figures 2, 3, 6 et 10 (le mode "plan fixe" pouvant être considéré comme un cas particulier du mode travelling, avec une vitesse de déplacement nulle) ;
- panoramique, en référence plus particulièrement aux Figures 4, 7 et 11 ;
- plan grue, en référence plus particulièrement aux Figures 5, 8 et 12.

Les Figures 2 et 3 illustrent schématiquement le mouvement à imprimer au drone pour réaliser une prise de vue en mode travelling, respectivement pour un travelling frontal et pour un travelling latéral.

Le travelling se caractérise par un mouvement de caméra à vitesse horizontale constante, parallèlement au sol.

Lorsque cette vitesse est nulle, le travelling se réduit à une prise de vue en plan fixe : il suffit alors à l'utilisateur de sélectionner ce mode "plan fixe" et éventuellement la durée du plan fixe, l'altitude et la direction de la caméra. Le pilote automatique estime alors le vent (voir plus bas), calcule l'angle moyen pour lutter contre le vent et, lorsque la prise de vue est déclenchée, le pilote automatique applique cet angle aux consignes du drone.

Pour un travelling frontal, où l'on veut donner l'impression de se rapprocher ou de s'éloigner d'une cible de la scène captée, par exemple d'un personnage, le déplacement horizontal se fait suivant l'axe principal Δ de la caméra, c'est-à-dire dans le cas présent le long de l'axe de roulis 24.

Cette situation est illustrée Figure 2, dans le cas d'un travelling frontal avant, indiqué par le mouvement de la flèche 36 (pour un mouvement de travelling arrière, le déplacement aurait lieu dans la même direction mais dans le sens inverse, pour produire un effet d'éloignement par rapport au personnage situé dans le champ de la caméra).

Dans le cas d'un travelling latéral, le mouvement est opéré suivant un axe horizontal perpendiculaire à l'axe Δ de la caméra, c'est-à-dire dans le cas présent le long de l'axe de tangage 22 du drone. Il s'agit par exemple de suivre un personnage en train de marcher ou de courir en le maintenant dans le cadre de l'image, en vue latérale.

Cette situation est illustrée Figure 3, dans le cas d'un travelling latéral vers la droite, indiqué par le mouvement de la flèche 36 (pour un travelling latéral gauche, le mouvement suivrait la même direction, mais en sens opposé).

Un deuxième mode de prise de vue possible, le mode panoramique, est illustré Figure 4.

Ce mode de prise de vue se caractérise par un mouvement de la caméra autour d'un axe vertical, en l'espèce l'axe de lacet 26 du drone (ou, en variante, un axe vertical passant par la pupille d'entrée de la caméra, donc décentré par rapport à l'axe de lacet du drone). Ce mouvement, schématisé par la flèche 40, est effectué à vitesse de rotation constante, dans un sens ou dans l'autre, à une vitesse relativement faible par rapport aux vitesses de pivotement couramment utilisées pour faire évoluer le drone en phase de pilotage commandé. On notera également que cette rotation doit être effectuée avec le drone à plat, c'est-à-dire que l'axe Δ de la caméra (correspondant à l'axe de roulis 24 du drone) doit balayer un plan horizontal parallèle au sol, c'est-à-dire à altitude constante du drone.

Concrètement, on laissera la possibilité à l'utilisateur de démarrer la prise de vue panoramique à l'altitude courante du drone, ou bien de donner une altitude de consigne que devra atteindre le drone avant de commencer la prise de vue panoramique.

Un troisième mode de vue possible proposé à l'utilisateur est un mode dit "plan grue". Il s'agit de donner l'illusion d'une caméra accrochée à l'extrémité d'une grue et à laquelle on imprime un mouvement d'éloignement de la cible suivant les trois axes de l'espace. Le mouvement correspondant 42, illustré Figure 5, est défini par les trois coordonnées X, Y, Z d'un vecteur 44 définissant la direction d'éloignement, et par la vitesse (constante) de cet éloignement.

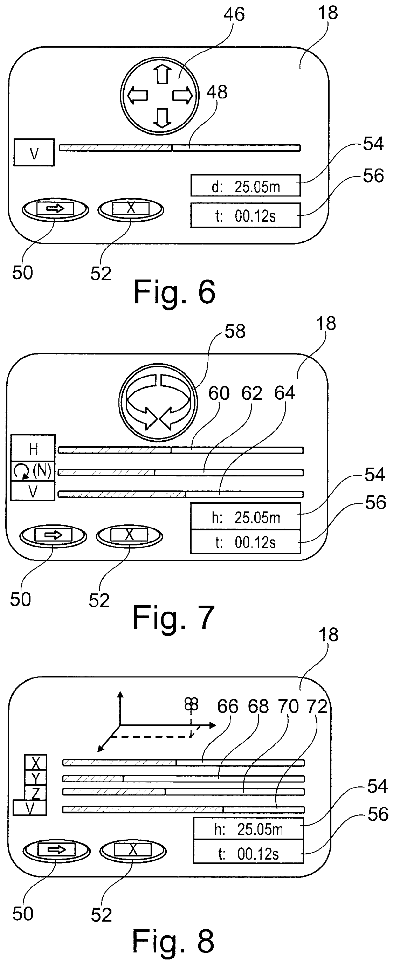

Les Figures 6 à 8 donnent des exemples de commandes présentées à l'utilisateur sur l'écran 18 du dispositif de télécommande 16 pour paramétrer les divers modes de prise de vue qui sont mis à sa disposition.

Ces commandes peuvent être des commandes tactiles de type bouton, curseur ..., en elles-mêmes bien connues.

La Figure 6 illustre l'écran de paramétrage du mode travelling. Un bouton 46 permet la sélection du type de travelling : frontal avant, frontal arrière, latéral droit, latéral gauche, et un curseur 48 permet de définir la vitesse constante de ce travelling (cette vitesse peut être nulle, le travelling se réduisant alors à une prise de vue en plan fixe). Des boutons 50 et 52 permettent respectivement de déclencher et d'arrêter la prise de vue en travelling, et des fenêtres 54 et 56 indiquent, en cours d'exécution, la distance parcourue et le temps écoulé depuis le début de la prise de vue.

La Figure 7 illustre l'écran de paramétrage du mode panoramique. Un bouton 58 permet de définir le sens, horaire ou antihoraire, de rotation et des curseurs 60, 62 et 64 permettent de définir respectivement une altitude de consigne pour l'exécution du panoramique, le nombre de tours ou de fractions de tour de la prise de vue, et la vitesse angulaire de rotation.

Les boutons 50 et 52 servent, comme dans le cas précédent, à déclencher et arrêter la prise de vue, tandis que les fenêtres 54 et 56 affichent respectivement l'altitude courante du drone et le temps écoulé depuis le début de la prise de vue.

La Figure 8 est un exemple d'écran de paramétrage du mode plan grue. Celui-ci comprend trois curseurs 66, 68, 70 définissant les coordonnées X, Y, Z du vecteur définissant la direction d'éloignement, ou bien les coordonnées d'un point cible à atteindre. Un autre curseur 72 définit la vitesse du mouvement d'éloignement. Les boutons 50 et 52 servent, comme dans le cas précédent, à déclencher et arrêter la prise de vue, tandis que les fenêtres 54 et 56 affichent respectivement l'altitude courante du drone et le temps écoulé depuis le début de la prise de vue.

Diverses autres commandes peuvent être ajoutées à celles que l'on vient de décrire, par exemple une commande fixant a priori la durée de la prise de vue et donc du déplacement contrôlé.

*Contrôle des vitesses et de l'attitude du drone*

On va maintenant exposer la manière dont ces trajectoires sont exécutées par le système de l'invention.

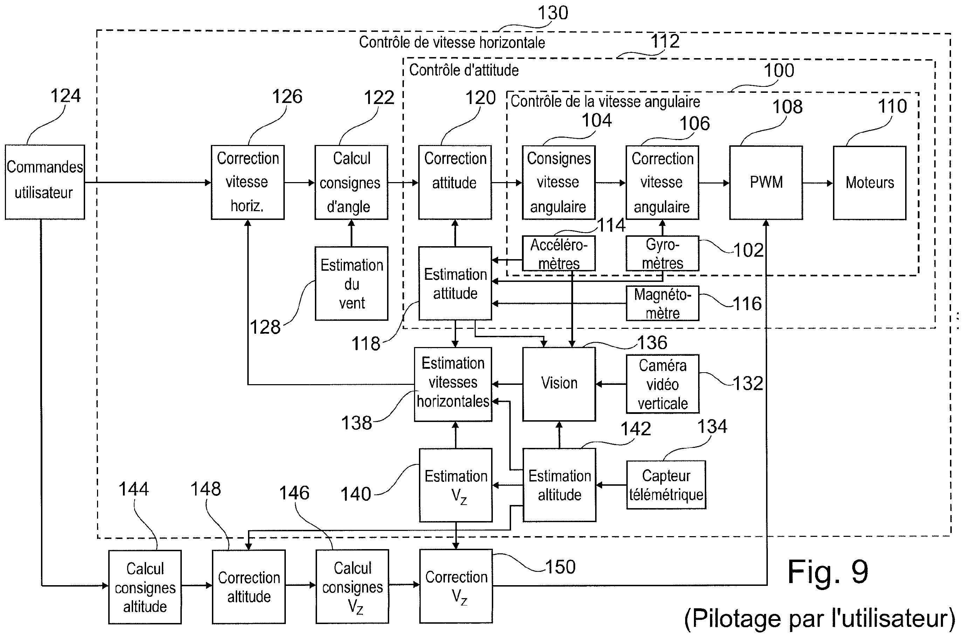

La Figure 9 est un schéma par blocs fonctionnels des différents organes de contrôle et d'asservissement du drone, dans une configuration permettant un pilotage conventionnel.

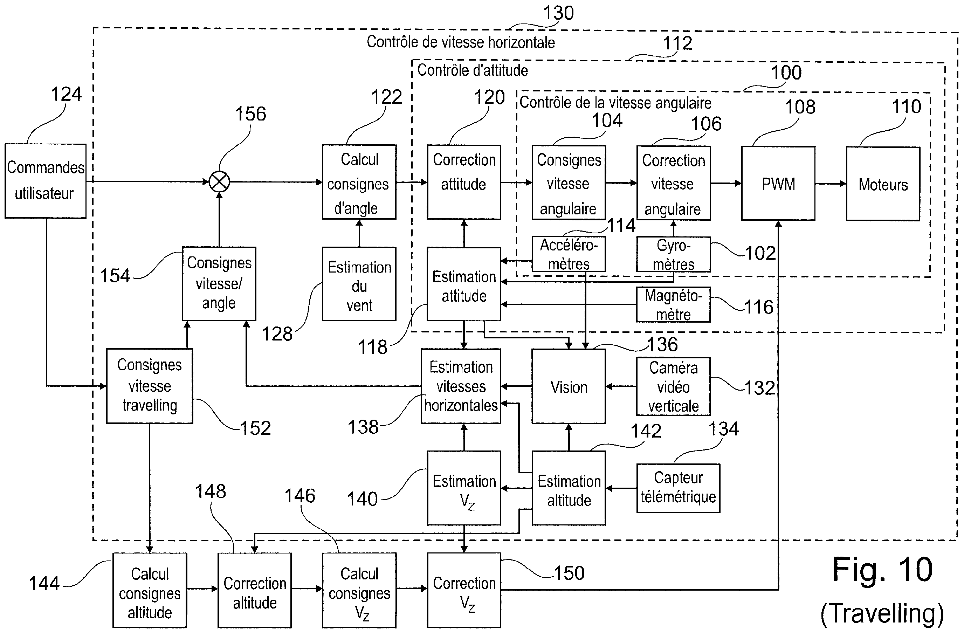

Les Figures 10 à 12 illustreront les modifications apportées à ce schéma conventionnel pour opérer les prises de vue en mode stabilisé selon l'invention, respectivement pour un travelling, un panoramique et un plan grue.

On notera que, bien que ces schémas soient présentés sous forme de circuits interconnectés, la mise en oeuvre des différentes fonctions est essentiellement logicielle, et cette représentation n'a qu'un caractère illustratif.

De façon générale, comme illustré Figure 9, le système de pilotage implique plusieurs boucles imbriquées pour le contrôle de la vitesse horizontale, de la vitesse angulaire et de l'attitude du drone, en plus du contrôle des variations d'altitude automatiquement ou sous l'effet d'une commande de l'utilisateur.

La boucle la plus centrale, qui est la boucle 100 de contrôle de la vitesse angulaire, utilise d'une part les signaux fournis par des gyromètres 102 et d'autre part une référence constituée par des consignes de vitesse angulaire 104. Ces différentes informations sont appliquées en entrée d'un étage 106 de correction de la vitesse angulaire, qui pilote lui-même un étage 108 de contrôle des moteurs 110 afin de commander séparément le régime des différents moteurs pour corriger la vitesse angulaire du drone par l'action combinée des rotors entraînés par ces moteurs.

La boucle 100 de contrôle de la vitesse angulaire est imbriquée dans une boucle 112 de contrôle d'attitude, qui opère à partir des indications fournies par les gyromètres 102, par des accéléromètres 114 et par un magnétomètre 116 donnant l'orientation absolue du drone dans un repère géomagnétique terrestre. Les données issues de ces différents capteurs sont appliquées à un étage 118 d'estimation d'attitude de type PI (Proportionnel-Intégrateur). L'étage 118 produit une estimation de l'attitude réelle du drone, appliquée à un étage 120 de correction d'attitude qui compare l'attitude réelle à des consignes d'angle générées par un circuit 122 à partir de commandes directement appliquées par l'utilisateur 124 et/ou de données générées en interne par le pilote automatique du drone via le circuit 126 de correction de vitesse horizontale. Les consignes éventuellement corrigées appliquées au circuit 120 et comparées à l'attitude réelle du drone sont transmises par le circuit 120 au circuit 104 pour commander les moteurs de manière appropriée.

En résumé, à partir de l'erreur entre la consigne (appliquée par l'utilisateur et/ou générée en interne) et la mesure de l'angle (donnée par le circuit d'estimation d'attitude 118), la boucle 112 de contrôle d'attitude calcule une consigne en vitesse angulaire à l'aide du correcteur PI du circuit 120.

La boucle 100 de contrôle de la vitesse angulaire calcule ensuite la différence entre la consigne de vitesse angulaire précédente et la vitesse angulaire effectivement mesurée par les gyromètres 102. La boucle calcule à partir de ces informations les différentes consignes de vitesse de rotation (et donc de force ascensionnelle), qui sont envoyées aux moteurs 110 pour réaliser la manoeuvre demandée par l'utilisateur et/ou planifiée par le pilote automatique du drone.

Le circuit 122 de calcul des consignes d'angle reçoit également des corrections issues d'un circuit 128 d'estimation du vent, dont on décrira plus bas le rôle lorsqu'il s'agira d'exécuter une prise de vue stabilisée.

La boucle de contrôle de vitesse horizontale 130 comporte également une caméra vidéo verticale 132 et un capteur télémétrique 134 faisant fonction d'altimètre. Un circuit 136 assure le traitement des images produites par la caméra verticale 132, en combinaison avec les signaux de l'accéléromètre 114 et du circuit d'estimation d'attitude 118, pour produire des données permettant d'obtenir une estimation des vitesses horizontales selon les deux axes de tangage et de roulis du drone, au moyen d'un circuit 138.

Les vitesses horizontales estimées sont corrigées par l'estimation de vitesse verticale donnée par un circuit 40 et par une estimation de la valeur de l'altitude, donnée par le circuit 142 à partir des informations du capteur télémétrique 134. En ce qui concerne les déplacements verticaux du drone, l'utilisateur 124 applique des commandes à un circuit de calcul de consignes d'attitude 144, consignes qui sont appliquées à un circuit de calcul de consignes de vitesse ascensionnelle $V_z$ 146 via le circuit de correction d'altitude 148 recevant la valeur d'attitude estimée donnée par le circuit 142. La vitesse ascensionnelle $V_z$ calculée est appliquée à un circuit 150 qui compare cette vitesse de consigne à la vitesse correspondante estimée par le circuit 140 et modifie en conséquence les données de commande des moteurs (circuit 108) de manière à augmenter ou réduire la vitesse de rotation simultanément sur tous les moteurs de façon à minimiser l'écart entre vitesse ascensionnelle de consigne et vitesse ascensionnelle mesurée.

On va maintenant exposer la manière dont sont élaborées les consignes de contrôle du drone au moyen de ces circuits.

Les données de vitesse du drone seront considérées dans un repère lié au corps du drone, savoir le repère {$u,v,w$} illustré Figure 1.

On désignera par :

- u la composante de la vitesse de translation horizontale dans la direction de l'axe principal du drone (le long de l'axe de roulis 24) ;
- v la composante de la vitesse de translation horizontale dans la direction transversale le long de l'axe de tangage 22) ; et
- w la vitesse de translation verticale,

le tout dans un repère lié au drone, donc indépendant de l'inclinaison de celui-ci par rapport au repère terrestre de référence.

Chacune des quatre hélices $i$ du drone ($i$ = 1 ... 4) exerce un couple $\Gamma i$ et une force de poussée ascensionnelle $F_i$ proportionnelle au carré de la vitesse de rotation $\omega_i$ du moteur :

$$\begin{cases} F_i = a\omega_i^2 \\ \Gamma_i = b\omega_i^2 \end{cases}$$

On applique la relation fondamentale de la dynamique, en projection dans le référentiel mobile du drone, ce qui donne les trois équations suivantes :

$$\dot{u} = (rv - qw) - g\sin\theta - Cxu$$
$$\dot{v} = (pw - ru) + g\sin\varphi\cos\theta + Cyv$$
$$\dot{w} = (qu - pv) + g\cos\varphi\cos\theta - \frac{1}{m}\sum_{i=1}^{4} a\,\omega_i^2$$

(Équations 1-3)

p, q et r étant les vitesses angulaires suivant les trois axes,

g étant l'accélération de la pesanteur,

$\phi$ et $\theta$ étant les deux angles définissant l'inclinaison du drone par rapport à l'horizontale (angles d'Euler),

$C_x$ et $C_y$ étant les coefficients de résistance à l'avancement (reflétant les forces de frottement subies par le drone) dans les deux axes horizontaux, a étant un coefficient liant la poussée et la vitesse ascensionnelle à la vitesse de rotation $\omega$, et

m étant la masse du drone.

On applique de la même façon le théorème du moment dynamique au système, toujours en projection dans le référentiel mobile, ce qui conduit aux trois équations suivantes :

$$I_x\dot{p} + qr(I_z - I_y) = la(\omega_2^2 - \omega_4^2)$$
$$I_y\dot{q} + pr(I_x - I_z) = la(\omega_1^2 - \omega_3^2)$$
$$I_z\dot{r} + pq(I_y - I_x) = b(\omega_1^2 - \omega_2^2 + \omega_3^2 - \omega_4^2)$$

(Équations 4-6)

$I_x$, $I_y$ et $I_z$ étant des paramètres représentatifs du coefficient d'inertie du drone dans les trois axes, et 1 étant la distance séparant le moteur de son centre de gravité.

Dans ces équations, le premier terme du membre de gauche correspond au moment dynamique du système, le second terme représente la contribution au moment dynamique des forces de Coriolis, et le membre de droite correspond aux moments exercés par les forces ascensionnelles $F_i$ et les couples $\Gamma_i$ créés par les hélices de chacun des rotors.

Enfin, on démontre la relation suivante faisant intervenir les trois angles d'Euler $\phi$, $\theta$ et $\psi$ :

$$\dot{\varphi} = p + (q\sin\varphi + r\cos\varphi)\tan\theta$$
$$\dot{\theta} = q\cos\varphi - r\sin\varphi$$
$$\dot{\psi} = \frac{q\sin\varphi + r\cos\varphi}{\cos\theta}$$

(Équations 7-9)

Le comportement du système est donc décrit au total par neuf équations à neuf inconnues.

Au voisinage du point d'équilibre, avec le drone en sustentation à l'horizontale (vitesse et inclinaison nulles), on aura :

$$u = v = w = \theta = \varphi = 0$$

Les Équations 1-9 deviennent :

$$g = \frac{1}{m}\sum_{1}^{4} a\omega_i^2 \,, \qquad p = q = r = 0, \quad \omega_1 = \omega_3, \quad \omega_2 = \omega_4, \quad \omega_1 = \omega_2$$

Et donc, au voisinage du point d'équilibre :

$$\omega_1 = \omega_2 = \omega_3 = \omega_4 = \frac{1}{2}\sqrt{\frac{mg}{a}} = \omega_0$$

Si l'on pose $w_i = \omega_i - \omega_0$, avec $i$ = 1... 4, et que l'on linéarise à l'ordre 1 les équations précédentes autour du point d'équilibre, on aboutit au système d'équations linéarisées suivant :

$$\begin{cases} \dot{u} = -g(\theta) - Cx * u \\ \dot{v} = g(\varphi) + Cy * v \\ \dot{w} = -\frac{2a\omega_0}{m}(w_1 + w_2 + w_3 + w_4) \\ \dot{p} = \frac{la\omega_0}{I_x}(w_2 - w_4) \\ \dot{q} = \frac{la\omega_0}{I_y}(w_1 - w_3) \\ \dot{r} = \frac{b\omega_0}{I_z}(w_1 + w_3 - w_2 - w_4) \\ \dot{\varphi} = p \\ \dot{\theta} = q \\ \dot{\psi} = r \end{cases}$$

$$(\text{Équations 10-18})$$

*Prise de vue en mode travelling*

La Figure 10 illustre les modifications apportées au schéma de la Figure 9 pour l'exécution de la prise de vue en mode travelling stabilisé (ou en mode plan fixe stabilisé, pour une consigne de vitesse nulle).

Les consignes de vitesse de travelling appliquées à un circuit 152 par l'utilisateur sont converties en consignes angulaires par un circuit 154 recevant également les valeurs de vitesse horizontale estimées par le circuit 138. Ces consignes comprennent la valeur plus ou moins élevée de la vitesse, ainsi que la direction (selon *u* ou bien selon *v*) et le sens de déplacement suivant la direction choisie.

Les consignes angulaires calculées par le circuit 154 sont appliquées directement en entrée du circuit 122, ces consignes étant éventuellement superposées en 156 à des commandes appliquées par l'utilisateur, dans la mesure où on lui permet d'apporter des corrections à la trajectoire du travelling pendant l'exécution de celui-ci.

En effet, du fait que le drone est piloté en boucle fermée, il est verrouillé en angle, mais par rapport à la trajectoire il peut dévier fortement, par exemple si le vent n'est pas régulier. Il est donc souhaitable que durant toute la phase de prise de vue avec contrôle en boucle fermé l'utilisateur puisse superviser le vol :

- soit en abandonnant la trajectoire et reprenant le pilotage manuel,
- soit en superposant de légères corrections superposées aux consignes de la boucle fermé. Ces légères corrections peuvent faire trembler l'image, mais il est important que l'utilisateur, qui est aussi l'opérateur de prise de vue, puisse choisir à tout moment ce qu'il préfère : soit une image fixe et une trajectoire qui dévie, soit un mouvement de l'image et une trajectoire plus fidèle (ce qui est très utile en particulier pour les travelings).

On notera que les consignes de trajectoire sont directement appliquées en entrée du circuit 122 en boucle ouverte, le circuit 126 de correction de vitesse horizontale de la Figure 9 étant ici désactivé de manière à ne pas produire d'oscillations autour d'une position de consigne sous l'influence d'un asservissement de vitesse.

Ceci permet de limiter le plus possible les mouvements en angle (qui sont normalement inhérents à l'asservissement de vitesse d'un quadricoptère) afin de ne pas avoir trop de mouvements présents dans l'image. Autrement dit, pour stabiliser l'image on acceptera de subir de légères variations de la vitesse de déplacement horizontale pendant la trajectoire du travelling, en éliminant les légères oscillations autour des axes de tangage et/ou de roulis qui sinon parasiteraient fortement l'image captée par la caméra.

Plus précisément, après avoir choisi la direction et le sens du mouvement de travelling souhaités, on récupère une vitesse de consigne de l'utilisateur $Vx_{rej}$ = constante ou bien $VyY_{ref}$ = constante.

Si l'on prend l'exemple d'un mouvement dans le plan suivant l'axe principal du drone, c'est-à-dire suivant l'axe $\Delta$ de la caméra (correspondant à un travelling frontal), on aura :

$$\dot{u} = -g(\theta) - Cx * u$$

Pour un angle $\theta$ tel que $\theta < 30°$, on peut utiliser la relation approximée suivante :

$$\dot{V_{xhorz}} = -g(\theta) - Cx * V_{xhorz}$$

Pendant une période de régime transitoire, $V_{xhorz}$ va converger vers sa valeur finale. La durée de cette période transitoire est en pratique de l'ordre de 1 à 2 secondes, valeur beaucoup plus faible que la durée habituelle d'une prise de vue en travelling. Pour arriver rapidement à un régime à peu près stabilisé, pendant cette période de régime transitoire on opérera en boucle fermée (donc sans chercher à minimiser les mouvements en angle), et on ne démarrera la prise de vue proprement dite que lorsque la vitesse de consigne aura été atteinte.

En régime permanent (correspondant à la configuration de la Figure 10, avec minimisation des mouvements angulaires), l'équation devient :

$$0 = -g(\theta) - Cx * V_{xhorz}$$

Cela signifie qu'en régime permanent, à vitesse constante, l'angle de tangage $\theta$ doit être constant.

La référence angulaire envoyée à la boucle de contrôle d'angle est donc la référence de vitesse, transformée par la relation ci-dessus, et ceci en boucle ouverte pour éviter les mouvements d'oscillation préjudiciables à la qualité de l'image captée.

Du fait de cette absence d'asservissement en boucle fermée, il peut être avantageux de compenser les perturbations extérieures (modélisées par un vent constant), ou plus précisément la projection du vecteur vitesse du vent sur l'axe de déplacement de la trajectoire. Cette correction est opérée par le circuit 128. Les perturbations extérieures modélisées par un vent constant dans la direction du mouvement peuvent s'exprimer par :

$$\dot{V_{xhorz_{air}}} = -g(\theta) - Cx * V_{xhorz_{air}}$$

Comme $V_{sol} = V_{air} - V_{vent}$, on a donc $V_{xhorzvent} = 0$ dans le vent (hypothèse de vent constant sur la durée de la prise de vue), d'où :

$$\dot{V_{xhorz_{sol}}} = -g(\theta) - Cx * V_{xhorz_{sol}} - Cx * V_{xhorz_{vent}}$$

Lorsque l'on est en régime permanent, on élimine l'effet de cette composante en adaptant la référence d'angle comme suit :

$$\theta_{ref}(k) = -\frac{Cx}{g} * V_{xhorz_{ref}} + \theta_{correction}(k)$$

avec:

$$\theta_{correction}(k) = \theta_{correction}(k-1) + K * (V_{xhorz_{ref}} - V_{xhorz_{mes}}(k))$$

Avantageusement, pour limiter les mouvements en angle liés au contrôle, dès que l'erreur de vitesse passe sous un seuil prédéterminé, le terme de compensation est figé à une valeur constante pendant tout le temps de la prise de vue. Une autre possibilité consiste à choisir la valeur du gain *K* de façon que le terme additif correspondant ne change que très lentement par rapport à la dynamique du drone, par exemple sur une dizaine de secondes.

*Prise de vue en mode panoramique*

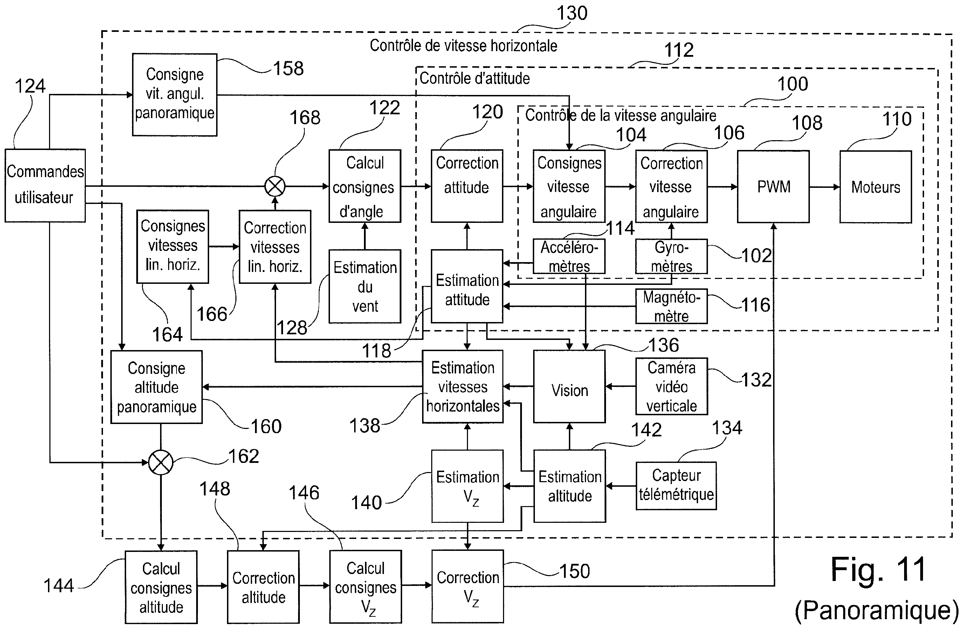

La Figure 11 illustre les modifications apportées au schéma de la Figure 9 pour l'exécution de la prise de vue en mode panoramique.
Les paramètres définis par l'utilisateur comprennent des consignes de vitesse angulaire pour le déroulement du panoramique, appliquées par un circuit 158 directement au circuit 104 de la boucle de contrôle de vitesse angulaire, et une consigne éventuelle d'altitude (altitude à atteindre par le drone, et à partir de laquelle sera déclenchée la prise de vue panoramique), appliquée à un circuit de consigne d'altitude 160.
Ici encore, de la même manière que ce qui a été expliqué pour le mode travelling, on peut laisser à l'utilisateur la possibilité de superposer, pendant la prise de vue, des commandes de déplacement horizontal, appliquées au circuit 12, et/ou des commandes de correction d'altitude, superposées en 162 aux consignes délivrées par le circuit 160.
Le circuit 160 applique directement les consignes paramétrées au circuit 144 de calcul des consignes d'altitude.
Ici encore, le circuit 126 (visible sur la Figure 9) de correction de la vitesse horizontale est désactivé, de manière à limiter le plus possible les mouvements d'oscillation autour des axes de tangage et de roulis.
Pour réaliser la prise de vue panoramique, le drone opère simplement avec les consignes suivantes :

$$\begin{pmatrix} \theta_{ref} \\ \varphi_{ref} \\ \psi_{ref} \\ r_{ref} \end{pmatrix} = \begin{pmatrix} 0 \\ 0 \\ \psi_{courant} \\ constante \end{pmatrix}$$

En d'autres termes, l'asservissement en vitesse est déconnecté, les consignes de roulis et de tangage sont nulles, et la consigne de rotation autour de l'axe de lacet est une consigne de rotation à vitesse angulaire constante.
Comme dans le cas précédent, il est possible de prévoir une correction permanente des perturbations extérieures modélisées par un vent constant.
Selon un autre aspect de l'invention, le mode panoramique peut être utilisé pour générer une succession de prises de vue fixes qui seront ensuite raccordées ensemble pour donner un panorama sur 360° de la scène autour du drone.
Dans ce cas, le mouvement du drone n'est plus un mouvement de rotation continue autour d'un axe vertical, mais un mouvement par pas successifs entre des points fixes décalés angulairement, définis par une référence en cap incrémentée après chaque prise de vue. Le pas de rotation est bien entendu choisis pour assurer un recouvrement suffisant entre les vues fixes successives.
Une contrainte spécifique à ce type de prise de vue est le fait que la rotation s'effectue autour d'un axe vertical passant par la pupille d'entrée de la caméra et non plus pas l'axe de lacet du drone, pour éviter des déformations géométriques qui ne permettraient pas un raccordement satisfaisant des images successives, compte tenu de l'écart relativement important de ces deux axes (de l'ordre de 15 cm).
Le mouvement de rotation autour d'un axe vertical doit alors être complété par un déplacement linéaire horizontal. Les consignes nécessaires sont calculées par un circuit 164 à partir des consignes de vitesse angulaire en lacet générées par le circuit 158 et de l'estimation d'attitude donnée par le circuit 118. Le résultat est délivré à un circuit 166 de correction des vitesses linéaires horizontales, qui reçoit également l'estimation des vitesses horizontales données par le circuit 138 et génère les consignes nécessaires, appliquées via 168 au circuit 122 de calcul des consignes angulaires en tangage en roulis.

Plus précisément, il convient de produire des commandes permettant au drone de suivre, dans le plan horizontal, une trajectoire circulaire centrée sur la pupille d'entrée de la caméra, c'est-à-dire d'imprimer au drone une vitesse selon l'axe *v* du drone, axe orienté tangentiellement par rapport à cette trajectoire.

La consigne de vitesse d'avancement tangentielle au cercle envoyée à la boucle d'asservissement en vitesse, notée *Vy$_{ref}$*, est déduite directement de la consigne de vitesse angulaire de rotation autour de l'axe vertical, donnée par l'utilisateur.

Pour une trajectoire de rotation uniforme autour d'un centre fixe, on a :

$$V = \dot{\psi} * R$$

$V$     étant la vitesse tangentielle (vitesse latérale selon l'axe *v* du drone),

$\dot{\psi}$     étant la vitesse angulaire du drone, et

$R$     étant le rayon du cercle, c'est-à-dire le décalage entre l'axe de lacet (axe vertical passant par le centre d'inertie du drone) et l'axe vertical passant par la pupille de la caméra.

La vitesse angulaire est donnée par l'expression suivante :

$$\dot{\psi} = \frac{q\sin\varphi + r\cos\varphi}{\cos\theta} \cong \frac{r * \cos\varphi}{\cos\theta}$$

La commande envoyée est alors donnée par :

$$\begin{pmatrix} Vy_{ref} \\ Vx_{ref} \\ r_{ref} \end{pmatrix} = \begin{pmatrix} \dot{\psi} * R \\ 0 \\ constante \end{pmatrix} = \begin{pmatrix} \dfrac{r_{mesuré} * \cos\varphi}{\cos\theta} * R \\ 0 \\ constante \end{pmatrix}$$

Ainsi, l'utilisateur choisit une vitesse de rotation autour de l'axe de la caméra frontale, de laquelle on déduit une vitesse de consigne d'avancement suivant l'axe *v* du drone.

Le drone décrit alors un cercle centré sur la pupille d'entré de la caméra, à la vitesse de rotation souhaitée par l'utilisateur.

*Prise de vue en mode grue*

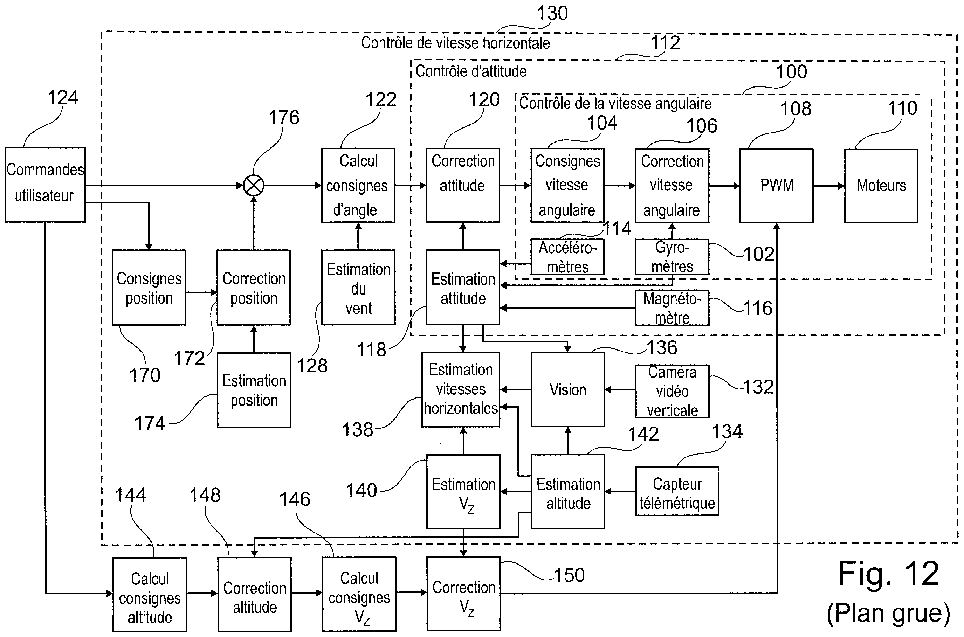

La Figure 12 illustre les modifications apportées au schéma de la Figure 9 pour l'exécution de la prise de vue en mode grue.

Les consignes de position X, Y, Z définissant la direction de la trajectoire sont appliquées par l'utilisateur à un circuit 170 puis à un circuit de correction de position 172 comparant la position de consigne à la position réelle mesurée, produite par un circuit d'estimation de position 174. Les consignes issues du circuit 172 sont éventuellement superposées en 176 à des commandes appliquées directement par l'utilisateur, si on laisse à celui-ci la faculté d'apporter pendant la prise de vue des modifications à la trajectoire préprogrammée.

Ici encore, on notera que le circuit 126 de la Figure 9 de correction de vitesse horizontale est désactivé, le contrôle opérant en boucle ouverte de manière à minimiser les mouvements d'oscillation du drone autour des axes de roulis et de tangage.

La commande produite est une commande en angle, calculée à partir de l'écart de position entre la référence et la position courante pour que la vitesse soit constante le long de la trajectoire :

$$\begin{pmatrix} X_{ref} \\ Y_{ref} \\ Z_{ref} \end{pmatrix} = \begin{pmatrix} constante \\ constante \\ constante \end{pmatrix}$$

Le principe du contrôle est le même que celui du mode travelling, avec des déplacements simultanés dans les deux directions horizontales à la fois et également dans la direction verticale :

- pour les mouvements horizontaux, la consigne de vitesse constante paramétrée par l'utilisateur est convertie en commandes angulaires, avec éventuellement compensation des perturbations extérieures (vent constant), afin de minimiser les mouvements de la caméra ;
- pour les mouvements verticaux, la vitesse de montée ou de descente est définie indépendamment des vitesses horizontales, à partir de la valeur de vitesse maximale choisie par l'utilisateur, de manière à atteindre le plus rapidement possible le point (X,Y,Z) paramétré par l'utilisateur. Lorsque la position courante est proche de la position souhaitée, le contrôle est désactivé et la prise de vue en plan grue peut alors commencer, à vitesse constante suivant la direction prédéfinie et de manière entièrement automatique.

**Revendications**

1. Un procédé de pilotage d'un drone (10) au moyen d'un appareil de télécommande (16), ce drone comportant une caméra video (14) embarquée apte à capter une séquence d'images d'une cible vue depuis le drone et à transmettre cette séquence à l'appareil, comprenant les étapes suivantes :

   - sélection par l'utilisateur d'un mode de prise de vue prédéterminé, défini par un jeu de paramètres décrivant une trajectoire à imprimer au drone ;
   - génération de valeurs de consigne à partir du jeu de paramètres, et application de ces consignes à une chaine de traitement pour le contrôle du drone ;
   - une fois le drone sur la trajectoire conforme aux paramètres, activation de la prise de vue par la caméra video (14),

   **caractérisé en ce que** :

   - le drone est un drone à voilure tournante de type quadricoptère à rotors multiples (12), dont les déplacements horizontaux résultent de mouvements angulaires de bascule autour d'axes de tangage et de roulis ;
   - les rotors multiples sont entrainés par des moteurs respectifs (110) commandés de manière différenciée par la chaine de traitement pour, à partir des consignes générées (152, 160, 164), piloter le drone en attitude et en vitesse par des asservissements (100-150) comprenant une boucle (130) de contrôle de la vitesse horizontale ;
   - les paramètres (46-48 ; 58-64 ; 66-72) décrivant la trajectoire appartiennent au groupe comprenant : mode de prise de vue, en point fixe ou en déplacement ; type de déplacement, en translation ou en rotation ; vitesse du déplacement ; direction ou axe du déplacement ; sens du déplacement ; durée du déplacement ; altitude de prise de vue ; et
   - l'activation de la prise de vue comprend l'activation d'un mode de stabilisation de la trajectoire par modification des asservissements, sélectivement en fonction du mode de prise de vue choisi,

   de manière à minimiser les oscillations parasites produites autour d'une position de consigne sous l'influence d'un asservissement de vitesse.

2. Le procédé de la revendication 1, dans lequel :

   - la boucle (130) de contrôle de la vitesse horizontale comprend un asservissement en boucle fermée, et
   - le mode de stabilisation de la trajectoire comprend une désactivation de la boucle fermée d'asservissement de la vitesse horizontale une fois atteinte la vitesse de déplacement paramétrée.

3. Le procédé de la revendication 1, dans lequel :

   - le mode de prise de vue est un mode en point fixe, et
   - le jeu de paramètres est apte à décrire une trajectoire à vitesse de déplacement nulle en rotation et en translation.

4. Le procédé de la revendication 1, dans lequel :

   - le mode de prise de vue est un mode travelling frontal ou latéral, et
   - le jeu de paramètres est apte à décrire une trajectoire en translation à vitesse de déplacement constante le long d'une direction horizontale, cette direction horizontale étant parallèle à l'axe (Δ) de la caméra pour un travelling frontal et perpendiculaire à l'axe (Δ) de la caméra pour un travelling latéral, la trajectoire étant orientée vers l'avant ou l'arrière pour un travelling frontal et vers la gauche ou vers la droite pour un travelling latéral.

5. Le procédé de la revendication 4, dans lequel les valeurs de consigne sont générées sous forme de consignes angulaires selon un angle de tangage du drone pour un travelling frontal, ou selon un angle de roulis du drone pour un travelling latéral, ces consignes angulaires étant appliquées :

- pendant une phase transitoire : à la chaine de traitement configurée en boucle fermée d'asservissement de vitesse horizontale apte à permettre au drone d'atteindre la vitesse de déplacement paramétrée, puis
- une fois la vitesse de déplacement atteinte : à la chaine de traitement configurée en boucle ouverte de contrôle de vitesse horizontale, avec désactivation de la boucle fermée d'asservissement.

6. Le procédé de la revendication 4, dans lequel la génération de consignes comprend la génération (128) de consignes additionnelles représentatives d'une vitesse horizontale compensatrice de la composante du vent dans la direction de déplacement du drone.

7. Le procédé de la revendication 6, dans lequel les consignes additionnelles sont figées à une valeur constante lorsque l'erreur de l'asservissement de vitesse horizontale passe au-dessous d'un seuil prédéterminé.

8. Le procédé de la revendication 1, dans lequel :

- le mode de prise de vue est un mode panoramique, et
- le jeu de paramètres est apte à décrire une trajectoire en rotation, dans un sens ou dans l'autre, autour d'un axe vertical (26) perpendiculaire à l'axe (Δ) de prise de vue de la caméra.

9. Le procédé de la revendication 8, dans lequel l'axe vertical est l'axe de lacet du drone, et les valeurs de consigne comprennent des consignes nulles d'angles de tangage et de roulis.

10. Le procédé de la revendication 9, dans lequel les valeurs de consigne générées comprennent une consigne en lacet constante propre à générer une rotation continue autour de l'axe vertical, et appliquée à la chaine de traitement configurée en boucle fermée d'asservissement angulaire, les consignes d'angles de tangage et de roulis étant appliquées à la chaine de traitement avec désactivation de la boucle fermée d'asservissement de vitesse horizontale.

11. Le procédé de la revendication 8, dans lequel l'axe vertical est un axe vertical passant par la pupille d'entrée de la caméra, et les valeurs de consigne comprennent des consignes d'angles de tangage et de roulis propres à générer un mouvement le long d'une trajectoire circulaire s'étendant dans un plan horizontal et centrée sur la pupille d'entrée de la caméra.

12. Le procédé de la revendication 11, dans lequel les valeurs de consigne générées comprennent une consigne en lacet propre à générer une rotation par pas successifs autour de l'axe vertical, entre des points fixes décalés angulairement définis par une référence en cap incrémentée après chaque prise de vue, et appliquée à la chaine de traitement configurée en boucle fermée d'asservissement angulaire.

13. Le procédé de la revendication 1, dans lequel :

- le mode de prise de vue est un mode plan grue, et
- le jeu de paramètres est apte à décrire une trajectoire en translation à vitesse constante, dans un sens ou dans l'autre, le long d'une direction faisant un angle avec le plan de l'horizontale.

14. Le procédé de la revendication 13, dans lequel les valeurs de consigne sont appliquées:

- pendant une phase transitoire : à la chaine de traitement configurée en boucle fermée d'asservissement de vitesse, apte à permettre au drone d'atteindre la vitesse de déplacement et de suivre la direction de déplacement par génération de consignes angulaires selon des angles de tangage et de roulis du drone, puis
- une fois la vitesse de déplacement et la direction de déplacement atteintes : à la chaine de traitement configurée en boucle ouverte de contrôle de vitesse, avec désactivation de la boucle fermée d'asservissement.

**15.** le procédé de la revendication 1, comprenant en outre :

- l'application par l'utilisateur de commandes de correction de trajectoire, superposées aux valeurs de consigne générées à partir du jeu de paramètres.

**Patentansprüche**

**1.** Verfahren zum Steuern einer Drohne (10) mittels eines Fernsteuergeräts (16), wobei diese Drohne eine an Bord befindliche Videokamera (14) aufweist, die dazu eingerichtet ist, eine Sequenz von Bildern eines von der Drohne aus gesehenen Ziels aufzunehmen und diese Sequenz an das Gerät zu senden, umfassend die folgenden Schritte:

- Auswählen, durch den Benutzer, eines vorbestimmten Bildaufnahmemodus, der durch einen Parametersatz zur Beschreibung einer der Drohne zu verleihenden Flugbahn definiert ist,
- Generieren von Sollwerten ausgehend von dem Parametersatz und Anwenden dieser Sollwertvorgaben auf eine Verarbeitungskette zur Überwachung der Drohne;
- sobald die Drohne auf der den Parametern entsprechenden Flugbahn ist, Aktivieren der Bildaufnahme durch die Videokamera (14),

**dadurch gekennzeichnet, dass**

- die Drohne eine Rotorblattdrohne des Quadricopter-Typs mit Multirotoren (12) ist, deren horizontale Bewegungen aus Schwenkwinkelbewegungen um Nick- und Rollachsen resultieren;
- die Multirotoren durch jeweilige Motoren (110) angetrieben werden, die auf differenzierte Weise durch die Verarbeitungskette betätigt werden, um, ausgehend von den generierten Sollwertvorgaben (152, 160, 164), die Drohne in Höhe und in Geschwindigkeit durch Regelungen (100-150) zu steuern, die einen Kreis (130) zur Überwachung der horizontalen Geschwindigkeit umfassen;
- die Parameter (46-48; 58-64, 66-72) zur Beschreibung der Flugbahn zu der Gruppe gehören umfassend: Bildaufnahmemodus, an einem Fixpunkt oder bei Bewegung; Bewegungstyp, in Translation oder in Rotation; Geschwindigkeit der Bewegung; Richtung oder Achse der Bewegung; Richtung der Bewegung; Dauer der Bewegung; Bildaufnahmehöhe; und
- das Aktivieren der Bildaufnahme das Aktivieren eines Modus zum Stabilisieren der Flugbahn durch Verändern der Regelungen, selektiv in Abhängigkeit von dem gewählten Bildaufnahmemodus, umfasst;

so dass Störoszillationen, die unter dem Einfluss einer Geschwindigkeitsregelung um eine Sollposition herum verursacht werden, minimiert werden.

**2.** Verfahren nach Anspruch 1, bei dem

- der Kreis (130) zur Überwachung der horizontalen Geschwindigkeit eine Regelung in geschlossenem Kreis umfasst und
- der Modus zum Stabilisieren der Flugbahn eine Deaktivierung des geschlossenen Kreises zur Regelung der horizontalen Geschwindigkeit umfasst, sobald die parametrierte Bewegungsgeschwindigkeit erreicht ist.

**3.** Verfahren nach Anspruch 1, bei dem

- der Bildaufnahmemodus ein Fixpunktmodus ist und
- der Parametersatz zur Beschreibung einer Flugbahn bei einer Bewegungsgeschwindigkeit eingerichtet ist, die in Rotation und in Translation gleich Null ist.

**4.** Verfahren nach Anspruch 1, bei dem

- der Bildaufnahmemodus ein Frontal- oder Lateral-Travelling-Modus ist und
- der Parametersatz zur Beschreibung einer Flugbahn in Translation mit konstanter Bewegungsgeschwindigkeit entlang einer horizontalen Richtung eingerichtet ist, wobei diese horizontale Richtung bei einem Frontal-Travelling parallel zu der Achse ($\Delta$) der Kamera und bei einem Lateral-Travelling senkrecht zu der Achse ($\Delta$) der Kamera ist, wobei die Flugbahn bei einem Frontal-Travelling nach vorne oder nach hinten und bei einem Lateral-Travelling nach links oder nach rechts ausgerichtet ist.

5. Verfahren nach Anspruch 4, bei dem die Sollwerte in Form von Winkelsollwertvorgaben bei einem Frontal-Travelling gemäß einem Nickwinkel der Drohne oder bei einem Lateral-Travelling gemäß einem Rollwinkel der Drohne generiert werden, wobei diese Winkelsollwertvorgaben angewendet werden

   - während einer Übergangsphase: auf die als geschlossenen Kreis zur Regelung der horizontalen Geschwindigkeit ausgebildete Verarbeitungskette, dazu eingerichtet, der Drohne das Erreichen der parametrierten Bewegungsgeschwindigkeit zu gestatten, und dann
   - sobald die Bewegungsgeschwindigkeit erreicht ist: auf die als offenen Kreis zur Überwachung der horizontalen Geschwindigkeit ausgebildete Verarbeitungskette, mit Deaktivierung des geschlossenen Regelkreises.

6. Verfahren nach Anspruch 4, bei dem das Generieren von Sollwertvorgaben das Generieren (128) von zusätzlichen Sollwertvorgaben umfasst, die repräsentativ sind für eine horizontale Geschwindigkeit zum Kompensieren der Komponente des Windes in der Bewegungsrichtung der Drohne.

7. Verfahren nach Anspruch 6, bei dem die zusätzlichen Sollwertvorgaben auf einen konstanten Wert festgelegt werden, wenn der Fehler in der Regelung der horizontalen Geschwindigkeit einen vorbestimmten Schwellwert unterschreitet.

8. Verfahren nach Anspruch 1, bei dem

   - der Bildaufnahmemodus ein Panoramamodus ist und
   - der Parametersatz zur Beschreibung einer Flugbahn in Rotation in der einen oder in der anderen Richtung um eine vertikale Achse (26) eingerichtet ist, die zu der Bildaufnahmeachse ($\Delta$) der Kamera senkrecht ist.

9. Verfahren nach Anspruch 8, bei dem die vertikale Achse die Gierachse der Drohne ist und die Sollwerte Sollwertvorgaben für Nick- und Rollwinkel gleich Null umfassen.

10. Verfahren nach Anspruch 9, bei dem die generierten Sollwerte eine konstante Giersollwertvorgabe umfassen, die geeignet ist, eine kontinuierliche Rotation um die vertikale Achse zu generieren und auf die als geschlossenen Kreis zur Winkelregelung ausgebildete Verarbeitungskette angewendet wird, wobei die Sollwertvorgaben für Nick- und Rollwinkel auf die Verarbeitungskette mit Deaktivierung des geschlossenen Kreises zur Regelung der horizontalen Geschwindigkeit angewendet werden.

11. Verfahren nach Anspruch 8, bei dem die vertikale Achse eine vertikale Achse ist, welche die Eingangspupille der Kamera passiert, und die Sollwerte Sollwertvorgaben für Nick- und Rollwinkel umfassen, die geeignet sind, eine Bewegung entlang einer kreisförmigen Flugbahn zu generieren, die in einer horizontalen Ebene verläuft und auf die Eingangspupille der Kamera zentriert ist.

12. Verfahren nach Anspruch 11, bei dem die generierten Sollwerte eine Giersollwertvorgabe umfassen, die geeignet ist, eine Rotation durch aufeinander folgende Schritte um die vertikale Achse zu generieren, zwischen Fixpunkten, die winklig versetzt sind und durch eine Kursreferenz definiert sind, die nach jeder Bildaufnahme inkrementiert wird, und die auf die als geschlossenen Kreis zur Winkelregelung ausgebildete Verarbeitungskette angewendet wird.

13. Verfahren nach Anspruch 1, bei dem

   - der Bildaufnahmemodus ein Kranebenenmodus ist und
   - der Parametersatz zur Beschreibung einer Flugbahn in Translation bei konstanter Geschwindigkeit in der einen oder anderen Richtung entlang einer Richtung eingerichtet ist, die mit der Ebene der Horizontalen einen Winkel bildet.

14. Verfahren nach Anspruch 13, bei dem die Sollwerte angewendet werden

   - während einer Übergangsphase: auf die als geschlossenen Kreis zur Geschwindigkeitsregelung ausgebildete Verarbeitungskette, dazu eingerichtet, der Drohne das Erreichen der Bewegungsgeschwindigkeit und das Verfolgen der Bewegungsrichtung durch Generieren von Winkelsollwertvorgaben gemäß dem Nick- und Rollwinkel zu gestatten, und dann
   - sobald die Bewegungsgeschwindigkeit und die Bewegungsrichtung erreicht sind: auf die als offenen Kreis zur Geschwindigkeitsüberwachung ausgebildete Verarbeitungskette, mit Deaktivierung des geschlossenen Regelkreises.

**15.** Verfahren nach Anspruch 1, ferner umfassend:

- das Anwenden, durch den Benutzer, von Befehlen zum Korrigieren der Flugbahn, welche die Sollwerte überlagern, die ausgehend von dem Parametersatz generiert werden.

**Claims**

**1.** A method for piloting a drone (10) by means of a remote-control device (16), said drone including an on-board video camera (14) operable to capture a sequence of images of a target viewed from the drone and to transmit said sequence to the device, comprising the following steps:

- selection by the user of a predetermined shooting mode, defined by a set of parameters describing a trajectory to be imparted to the drone;
- generation of set-point values based on the set of parameters, and application of said set-points to a processing chain for controlling the drone;
- once the drone on the trajectory in accordance with the parameters, activation of the shooting by the video camera (14),

**characterized in that**:

- the drone is a rotary-wing drone of the quadricopter type with multiple rotors (12), whose horizontal displacements result from angular tilt movements about pitch and roll axes;
- the multiple rotors are driven by respective motors (110) controlled in a differentiated manner by the processing chain so as, based on the generated set-points (152, 160, 164), to pilot the drone in attitude and speed by feedback controls (100-150) including a horizontal speed control loop (130);
- the parameters (46-48; 58-64; 66-72) describing the trajectory belong to the group comprising: shooting mode, fixed point or in motion; type of displacement, in translation or in rotation; speed of the displacement; orientation or axis of the displacement; direction of the displacement; duration of the displacement; shooting altitude; and
- the shooting activation comprises the activation of a trajectory stabilisation mode by modification of the feedback controls, selectively according to shooting mode chosen,

in order to minimize the spurious oscillations produced about a set-point position under the influence of a speed feedback control.

**2.** The method of claim 1, wherein:

- the horizontal speed control loop (130) comprises a closed-loop feedback control, and
- the trajectory stabilisation mode comprises a deactivation of the horizontal speed feedback control closed loop once the parameterized speed of displacement reached.

**3.** The method of claim 1, wherein:

- the shooting mode is a fixed-point mode, and
- the set of parameters is adapted to describe a trajectory with a null rotational and translational displacement speed.

**4.** The method of claim 1, wherein:

- the shooting mode is a frontal or lateral travelling shot mode, and
- the set of parameters is adapted to describe a translational trajectory with a constant speed of displacement along a horizontal direction, said horizontal direction being parallel to the axis ($\Delta$) of the camera for a frontal travelling shot and perpendicular to the axis ($\Delta$) of the camera for a lateral travelling shot, the trajectory being oriented forward or rearward for a frontal travelling and towards the left or the right for a lateral travelling shot.

**5.** The method of claim 4, wherein the set-point values are generated as angular set-points according to a pitch angle of the drone for a frontal travelling shot, or according to a roll angle of the drone for a lateral travelling shot, said angular set-points being applied:

- during a transitory phase: to the processing chain configured as a horizontal speed feedback control closed loop adapted to allow the drone to reach the parameterized speed of displacement, then
- once the speed of displacement reached: to the processing chain configured as a horizontal speed control open loop, with deactivation of the feedback control closed loop.

6. The method of claim 4, wherein the generation of set-points comprises the generation (128) of additional set-points representative of a horizontal speed compensatory of the wind component in the direction of displacement of the drone.

7. The method of claim 6, wherein the additional set-points are fixed to a constant value when the error of the horizontal speed feedback control passes under a predetermined threshold.

8. The method of claim 1, wherein:

   - the shooting mode is panoramic mode, and
   - the set of parameters is adapted to describe a rotational trajectory, in one direction or in the other, about a vertical axis (26) perpendicular to the shooting axis ($\Delta$) of the camera.

9. The method of claim 8, wherein the vertical axis is the yaw axis of the drone, and the set-point values comprise null pitch and roll angle set-points.

10. The method of claim 9, wherein the set-point values generated comprise a constant yaw set-point liable to generate a continuous rotation about the vertical axis, and applied to the processing chain configured as an angular feedback control closed loop, the pitch and roll angle set-points being applied to the processing chain with deactivation of the horizontal speed feedback control closed loop.

11. The method of claim 8, wherein the vertical axis is a vertical axis passing through the entrance pupil of the camera, and the set-point values comprise pitch and roll angle set-points liable to generate a movement along a circular trajectory extending in a horizontal plane and centred to the entrance pupil of the camera.

12. The method of claim 11, wherein the set-point values generated comprise a yaw set-point liable to generate a rotation by successive steps about the vertical axis, between fixed points angularly offset relative to each other, defined by a heading reference incremented after each shooting, and applied to the processing chain configured as an angular feedback control closed loop.

13. The method of claim 1, wherein:

   - the shooting mode is a boom dolly plane mode, and
   - the set of parameters is adapted to describe a translational trajectory at constant speed, in one direction or the other, along an orientation forming an angle with the horizontal plane.

14. The method of claim 13, wherein the set-point values are applied:

   - during a transitory phase: to the processing chain configured as a speed feedback control closed loop adapted to allow the drone to reach the speed of displacement and to follow the direction of displacement by generation of angular set-points according to drone pitch and roll angles, then
   - once the speed of displacement and the direction of displacement reached: to the processing chain configured as a speed control open loop, with deactivation of the feedback control closed loop.

15. The method of claim 1, further comprising:

   - the application by the user of trajectory correction commands, superimposed to the set-point values generated based on the set of parameters.

17

Fig. 1

Fig. 2

Fig. 3

Fig. 4

Fig. 5

46    18

48

| V |

d: 25.05m — 54

t: 00.12s — 56

50    52

## Fig. 6

58    18

60 62 64

| H |
| Ω (N) |
| V |

h: 25.05m — 54

t: 00.12s — 56

50    52

## Fig. 7

18

66 68 70 72

| X |
| Y |
| Z |
| V |

h: 25.05m — 54

t: 00.12s — 56

50    52

## Fig. 8

Fig. 9

(Pilotage par l'utilisateur)

EP 2 613 214 B1

**Fig. 10**
(Travelling)

Fig. 11
(Panoramique)

Fig. 12
(Plan grue)

**EP 2 613 214 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010061099 A2
- EP 2364757 A1
- WO 2010100436 A2
- US 20090157233 A1
- WO 2009109711 A2
- FR 2915569 A1